# EUROPEAN PATENT APPLICATION

(11) **EP 0 530 925 A1**
(43) Date of publication of application: **10.03.1993**
(21) Application number: 92202677.8
(22) Date of filing: 04.09.1992
(51) Int. Cl.: B62H 5/00

(54) **Bicycle lock**

(30) Priority: 04.09.1991 NL 9101491
(71) Applicant: Grill, Béla Zoltan, NL-4851 SJ Ulvenhout (NL); Alberts, Thomas Johannes Antonius Jozeph, NL-4847 SV Teteringen (NB) (NL)
(72) Inventor: Grill, Béla Zoltan, NL-4851 SJ Ulvenhout (NL); Alberts, Thomas Johannes Antonius Jozeph, NL-4847 SV Teteringen (NB) (NL)
(74) Representative: Vollebregt, Cornelis Jacobus, Ir.

(57) **Abstract**

The invention relates to a lock (1) for a bicycle having a frame. The lock is provided with an at least substantially U-shaped lock shackle (1) and with a lock pin (6), which can be detachably locked between the ends of said lock shackle (1). The lock shackle (1) is thereby coupled to a coupling piece (9) to be movably provided on a part of the frame (11) so as to be rotatable about said frame part. The lock shackle (1) is rotatable with respect to the coupling piece (9), about a pivot pin (3) extending transversely to the legs of the lock shackle. Preferably the pivot pin (3) is formed by the central axis of the connecting piece (3) of the lock shackle connecting the two legs (2) of the U-shaped shackle (1).

## Description

The invention relates to a lock for a bicycle, moped or the like having a frame, said lock being provided with an at least substantially U-shaped lock shackle and with a lock pin, which can be detachably locked between the ends of said lock shackle.

A survey of the conventional locks for bicycles or the like is given in Consumentengids, May 1991. In this publication also the so-called shackle locks are discussed, which are built up of an at least substantially U-shaped lock shackle and a lock pin, by means of which a bicycle or the like can be locked to e.g. a post or the like. The shackle is a separate part thereby, which must be carried along somehow when riding the bicycle, moped or the like. For said carrying along special clamps are available, which can be fastened to the frame of the bicycle, moped or the like. Such locks and clamps usually offer little ease of operation, whilst there is a risk that the user will inadvertently fail to fasten the lock shackle properly or omit to secure the lock shackle in the clamping device, as a result of which the lock shackle may be lost.

The object of the invention is to obtain a lock of the above kind, wherein the drawbacks of the known locks can be avoided.

According to the invention this may be achieved in that the lock shackle is coupled to a coupling piece to be movably provided on a part of the frame so as to be rotatable about said frame part, whereby the lock shackle is rotatable with respect to the coupling piece, about a pivot pin extending transversely to the legs of the lock shackle.

By using the construction according to the invention the lock shackle may be undetachably connected to the frame of the bicycle, moped or the like and be brought into a large number of different positions by moving and/or rotating said shackle along the respective part of the frame, e.g. a frame tube, so as to lock casu quo secure the bicycle, moped or the like to a certain object.

The invention will be explained in more detail hereafter with reference to a possible embodiment of the construction according to the invention illustrated in the accompanying Figures.

Figure 1 shows part of a frame of a bicycle.

Figure 2 is a larger-scale view of the locking according to the invention with securing means, along the line II - II in Figure 1, leaving out the bicycle frame.

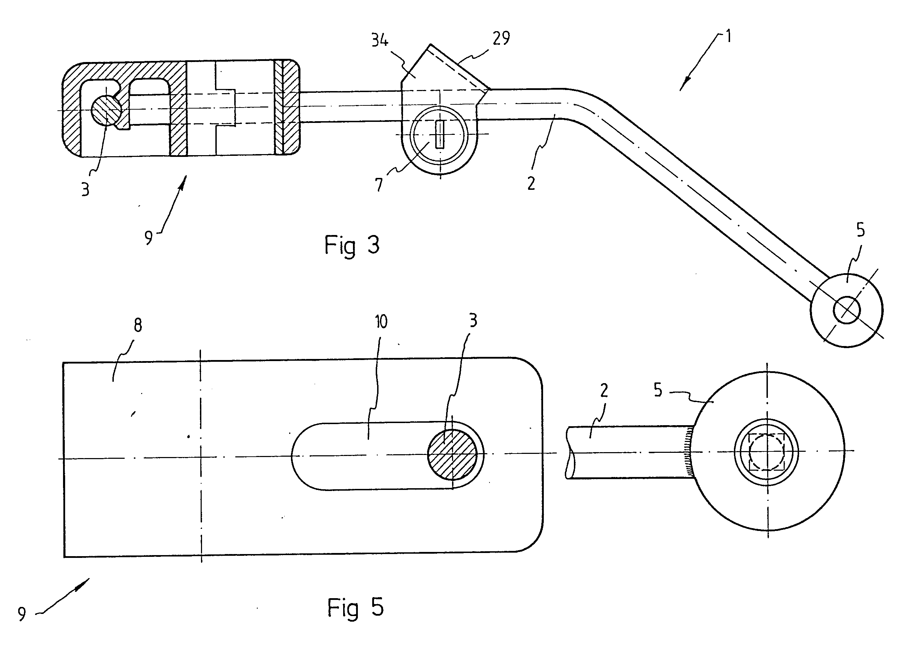

Figure 3 is a partly sectional side view of Figure 2.

Figure 4 is a larger-scale plan view of the lock, wherein the lock shackle is turned through an angle of about 180 degrees with respect to the coupling piece, in comparison with the position shown in Figure 3.

Figure 5 is a side view of Figure 4.

Figure 6 is a plan view of a retaining piece.

Figure 7 is a side view of Figure 6.

Figure 8 is a plan view of a retaining bracket.

Figure 9 is a side view of Figure 8.

Figure 10 shows part of a modified embodiment.

The lock illustrated in the Figures comprises a usually at least substantially U-shaped lock shackle 1 having a pair of legs 2, which are interconnected by means of a connecting piece 3 extending transversely to said legs.

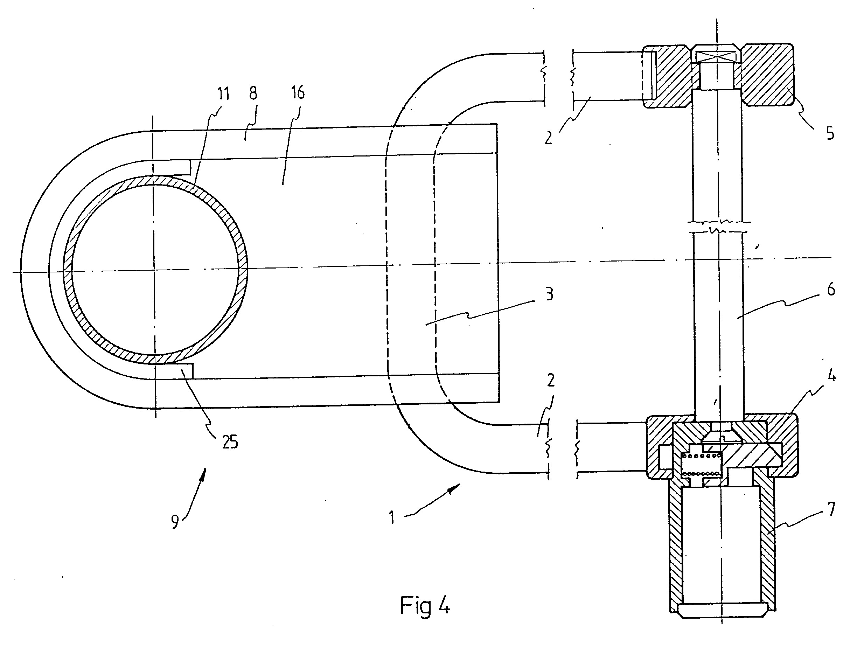

Eyes 4 and 5 respectively are mounted on the free ends of the legs 2, so as to receive a lock pin or locking bar 6, which can be locked to the lock shackle 1 by means of a locking mechanism 7 in the manner shown in Figure 4. After the lock 7 has been unlocked the lock pin 6 can be removed from the eyes 4, 5.

This is a usual construction for so-called shackle locks and does not form part of the invention, so that the shape of the lock pin 6 and the locking mechanism 7 connected thereto need not be discussed in more detail herein.

As is furthermore shown in the Figures the lock shackle 1 is coupled to a further U-shaped shackle 8, which forms part of a coupling piece 9.

Slotted holes 10 are provided in the legs of the shackle 8 so as to couple the lock shackle 1 to the shackle 8, said slotted holes being dimensioned such that e.g. the eye 5 with the adjoining leg 2 can be passed therethrough, in order to be able to bring the lock shackle 1 and the shackle 8 in the position shown in the Figures with respect to each other.

Before the lock shackle 1 is coupled to the shackle 8 said shackle 8 is first disposed around a part of the frame of a bicycle, moped or the like, in such a manner that said part of the frame is located between the legs of the shackle 8. In the illustrated embodiment the shackle 8 is disposed around the frame tube 11, which also accommodates the seat pillar 12 of the bicycle saddle 13.

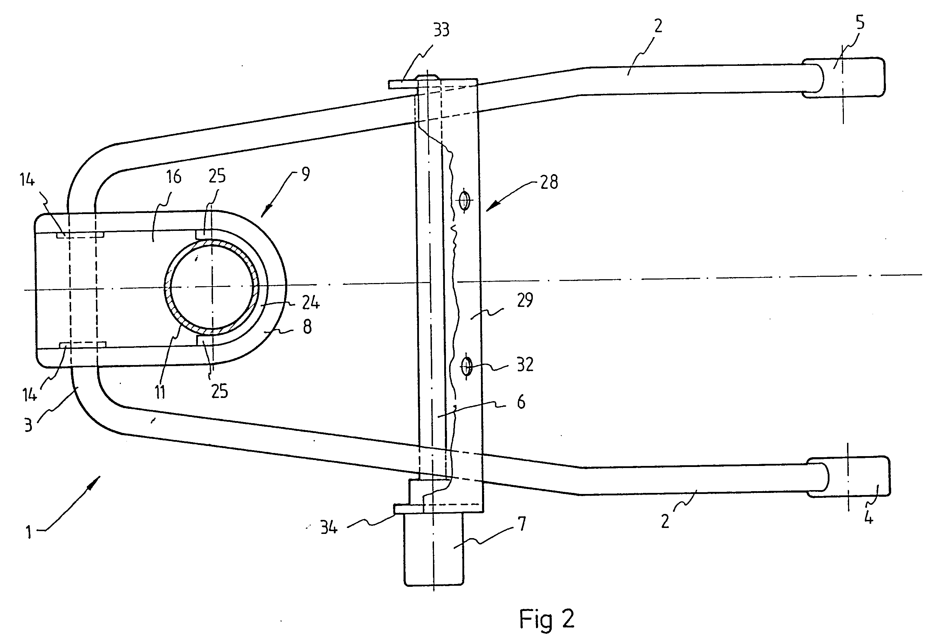

When thus the two shackles have been provided, the part 3 of the lock shackle 1 is secured against displacement in its longitudinal direction with respect to the shackle 8 by means of two spring washers 14, which are provided in circular grooves provided in the connecting piece 3 for that purpose, in such a manner that said washers 14 abut against the facing sides of the legs of the shackle 8 (Figure 2).

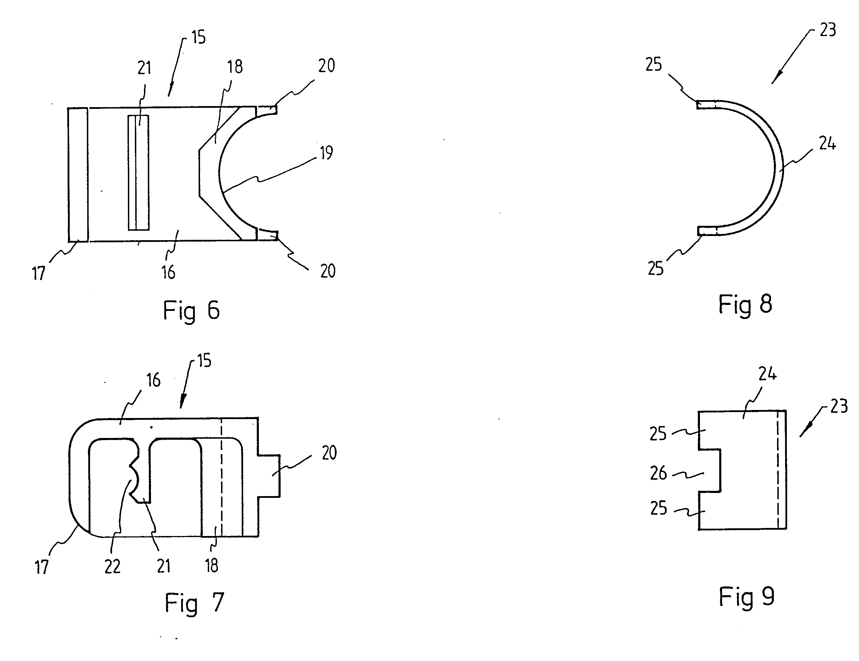

In order to prevent movement of the shackle 8 in a direction perpendicularly to the longitudinal direction of the frame tube 11, use is made of the retaining piece shown in Figures 6 and 7 and of the retaining bracket shown in Figures 8 and 9, which parts form part of the coupling piece 9.

As is shown in Figures 6 and 7, the retaining piece 15 comprises a plate-shaped part 16. A flat rib 17, extending at least substantially perpendicularly to the plate-shaped part 16, adjoins one end of said plate-shaped part 16, whilst a rib 18 extending in the same direction, perpendicularly to the plate-shaped part, adjoins the other end, said rib 18 at its side remote from the rib 17 being bounded by a bent wall part 19 and having two projecting noses 20 at its ends.

A further rib 21 located between the ribs 17 and 18 and extending perpendicularly to the plate-shaped part 16 is provided on the plate-shaped part 16 between the ribs 17 and 18, said rib 21 at its side facing the rib 17 having a recess 22, which is bounded by a curved surface, whose radius of curvature is equal to the radius of the connecting piece 3 of the lock shackle 1.

The width of the rib 21 has thereby been selected slightly less than the width of the plate-shaped part 16, as is apparent from Figure 6.

The retaining bracket 23 shown in Figure 8 is provided with a part 24 bent in the shape of a semi-circle, two superposed noses 25 adjoining each end of said part. Between each pair of noses there is an open space 26, whose dimensions correspond with the dimensions of a nose 20.

The retaning bracket 23 and the retaining piece 15 can initially be placed on the frame tube 12 above the shackle 8, in a position in which the projecting noses 20 of the retaining piece 15 engage the recesses 26 of the retaining bracket 23 and in which the frame tube 12 is accommodated with a close fit in the passage defined by the surface 19 of the retaining piece and the inner surface of the curved part 24. Then the retaining means thus formed by the retaining piece and the retaining bracket can be moved downwards in the direction of the shackle 8, so as to be received between the legs of said shackle 8. The width of the plate-shaped part 16 is equal to the spacing between the facing sides of the parallel legs of the shackle 8.

When the retaining means formed by the retaining piece 15 and the retaining bracket 23 is pressed downwards, the connecting piece 3 of the lock shackle 1 will snap into the recess 22 provided in the leg 21 of the retaining piece 15, whereby the construction is such that the connecting piece 3 of the lock shackle 1 will be pressed towards the left, when seen in Figure 2, by the spring force of the leg 21, as a result of which the washers 14 will abut against the boundary surface of the leg 17 of the retaining piece 15 facing the leg 21 of said retaining piece 15.

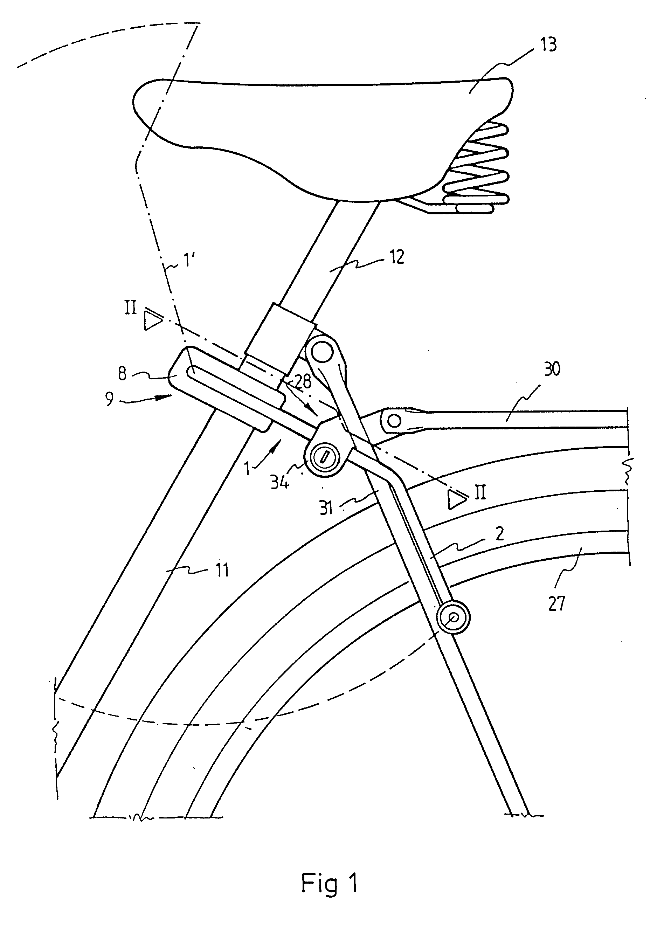

It will be apparent that in this manner the shackle 8 is connected to the frame tube 12 and the lock shackle 1 to the shackle 8 so as to be rattle-free. The shackle 8 is thereby movable in the longitudinal direction of the frame tube 11 with respect to said frame tube, whilst it is also rotatable about the frame tube. In addition to that the lock shackle 1 is rotable with respect to the shackle 8, about a pivot axis formed by the central axis of a connecting piece 3 and perpendicularly crossing the central axis of the frame tube 11, for example from the position of the lock shackle 1 illustrated in full lines in Figure 1 to the position 1' illustrated in chain-dotted lines.

In the position of the lock shackle illustrated in full lines in Figure 1 the bicycle can be locked in the usual manner, whereby the rear wheel 27 is secured against rotation by inserting the lock pin 6 between the spokes of the rear wheel 27 and locking said pin in the eyes 4 and 5 in the usual manner.

From this position, however, the lock shackle 1 can be swung upwards about the pivot axis formed by the central axis of the connecting piece 3, and be turned sideways through a desired angle about the frame tube, for example in order to lock the bicycle to a post or the like located near the bicycle.

When using a lock according to the invention the bicycle may for example be simply locked to horizontally extending beams of brackets anchored in the ground or of bicycle stands, when such beams are provided with eyes through which the lock pin can be passed. In this manner an effective locking up of bicycles equipped with a lock according to the invention can be realised by means of very simple "parking facilities".

In order to secure the lock shackle against displacement during cycling the bicycle may be equipped with suitable holding means 28, in this embodiment being formed by a fastening plate 29, which is secured to the front side of the seat stays 31 of the bicycle near the front attachment of a usual luggage carrier 30 by means of bolts, which are passed through holes 32 (Figure 2) provided in the fastening plate 29 for this purpose.

Downwardly sloping eyes 33 and 34, extending towards the front, are mounted on the ends of the plate 29, said ears having holes for receiving the lock pin 6 and further means co-operating with the locking device 7, so as to lock the lock pin 6 to the holding means 28 in the position illustrated in Figures 1 and 2. In this position the legs 2 of the lock shackle 1 are thereby retained between the lock pin 6 extending under said legs and the part 29 of the holding means 28 located above said legs. The holding means may be provided with a resilient lining, against which the legs are pressed in the stow-away position, so as to prevent rattling of the lock shackle 1 during cycling.

From the foregoing it will be apparent that when the construction according to the invention is used, a bicycle lock connected to the frame of the bicycle, moped or the like which is easy to operate is obtained, which bicycle lock can be disposed in a large number of different positions with respect to the frame of the bicycle, moped or the like, so as to lock a bicycle, moped or the like to another object, or in a position in which rotation of the rear wheel 27 is prevented.

It will be apparent that the bicycle lock may for example also be mounted on the steering tube of the frame or the like.

To replace the yellow plastic sleeve intended for bicycle registration, which is usually provided around a frame tube and which is easy to remove, the outside of the shackle 8 may be lined with a (yellow) strip of plastic material, which is provided with keyholes corresponding with the keyholes 10. Such a plastic strip will thus be properly secured.

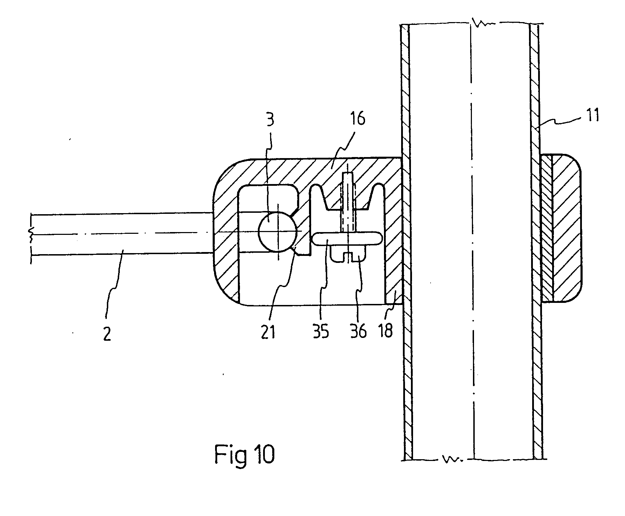

In the embodiment according to Figure 10 a pressure plate is provided in the space between the rib 21 and the rib 18 slightly tapering off in the direction of the plate-shaped part 16 of the retaining piece 15, said pressure plate being fastened to the retaining piece 15 by means of a screw 36. It will be apparent that when the screw 36 is tightened the ribs 21 and 18 will be pressed apart. In this manner the friction force between on the one hand the rib 21 and the connecting piece 3 of the lock shackle 1 and on the other hand between the rib 18 and the frame tube 11 can be influenced.

## Claims

1. A lock for a bicycle, moped or the like having a frame, said lock being provided with an at least substantially U-shaped lock shackle and with a lock pin, which can be detachably locked between the ends of said lock shackle, characterized in that the lock shackle is coupled to a coupling piece to be movably provided on a part of the frame so as to be rotatable about said frame part, whereby the lock shackle is rotatable with respect to the coupling piece, about a pivot pin extending transversely to the legs of the lock shackle.

2. A lock according to claim 1, characterized in that said pivot pin is formed by the central axis of the connecting piece of the lock shackle connecting the two legs of the U-shaped shackle.

3. A lock according claim 1 or 2, characterized in that the connecting piece interconnecting the legs of the lock shackle is rotatably journal led in keyholes provided in the legs of a U-shaped shackle.

4. A lock according claim 3, characterized in that a retaining means comprising two parts is located between the legs of the U-shaped shackle, whereby said two parts are designed to enclose a frame tube of a bicycle, moped or the like with a close fit, whilst one of said parts comprises a resilient part acting on said connecting piece, said part tending to push the connecting piece towards one end of the U-shaped shackle.

5. A lock according to any one of the preceding claims, characterized in that means are provided for influencing the friction force between the lock shackle and the coupling piece.

6. A lock according to any one of the preceding claims, characterized in that means are provided for influencing the friction force between the coupling piece and the frame.

7. A bicycle, moped or the like provided with a lock according to any one of the preceding claims.

8. A bicycle, moped or the like according to claim 7, characterized in that the bicycle, moped or the like is provided with holding means for holding the lock shackle during cycling.

9. A bicycle, moped or the like according to claim 8, characterized in that said holding means comprises a plate-shaped part secured to the frame, to which two ears are connected for locking up the lock pin, all this in such a manner that the lock shackle can be retained between said plate-shaped part and said lock pin.
